# EUROPÄISCHE PATENTANMELDUNG

(11) **EP 3 242 104 A1**
(43) Veröffentlichungstag der Anmeldung: **08.11.2017**
(21) Anmeldenummer: 17163618.6
(22) Anmeldetag: 29.03.2017
(51) Int. Cl.: F28F 9/00, F28F 9/02, F01N 5/02, F02B 29/04, F02M 26/32

(54) **WÄRMEÜBERTRAGER**

(30) Priorität: 29.04.2016 DE 102016207443
(71) Anmelder: Mahle International GmbH, 70376 Stuttgart (DE)
(72) Erfinder: FABER, Christian, 70619 Stuttgart (DE); HORNTASCH, Leander, 71729 Erdmannhausen (DE); HUND, Simon, 70199 Stuttgart (DE); SIEGEL, Albrecht, 71642 Ludwigsburg (DE)
(74) Vertreter: BRP Renaud & Partner mbB Rechtsanwälte Patentanwälte Steuerberater

(57) **Zusammenfassung**

Die Erfindung betrifft einen Wärmeübertrager (1) für eine Brennkraftmaschine mit einem Rohrkörper (2,2') und mit einem um den Rohrkörper (2,2') verlaufenden Flansch (3). Erfindungswesentlich ist dabei, dass der Flansch (3) ein erstes kreisförmiges Teil (4) und/oder ein zweites kreisförmiges Teil (5) aufweist, die beide als gezogene oder rollierte Blechbauteile ausgebildet sind.

Hierdurch kann insbesondere ein leichter und nachbearbeitungsfreier Flansch (3) realisiert werden.

## Beschreibung

Die vorliegende Erfindung betrifft einen Wärmeübertrager für eine Brennkraftmaschine mit einem Grundrohr und einem zumindest teilweise um das Grundrohr verlaufenden Flansch gemäß dem Oberbegriff des Anspruchs 1.

Aus der DE 2012 211 311 A1 ist ein gattungsgemäßer Wärmeübertrager für eine Brennkraftmaschine mit einem Rohrkörper, in welchem ein erstes Fluid führende Rohre angeordnet sind, die endseitig in Rohrböden gehalten sind, und mit einem zumindest teilweise um den Rohrkörper verlaufenden Flansch bekannt. Die in dem Rohrkörper verlaufenden Rohre bilden dabei einen ersten Strömungskanal, beispielsweise für Abgas, wogegen zwischen den Rohren und dem Rohrkörper ein zweiter Strömungskanal, beispielsweise für Kühlmittel, gebildet ist. An zumindest einem seiner Endbereiche weist der Wärmeübertrager einen um den Rohrkörper umlaufenden Flansch auf, der einteilig mit dem Wärmeübertrager ausgebildet ist. Durch die einteilige Ausbildung des Flansches mit dem Rohrkörper des Wärmeübertragers soll insbesondere ein zusätzlicher Montageschritt entfallen können.

Aus der DE 10 2010 025 031 A1 ist ein Wärmeübertrager für einen Verbrennungsmotor mit ebenfalls einem Rohrkörper mit einem umlaufenden Ring und endseitigen Rohrböden bekannt, wobei die Rohrböden mit dem Rohrkörper verbunden sind. Im Bereich der Rohrböden ist dabei jeweils eine Endkappe angeordnet, von denen eine eine umlaufend nach außen gerichtete Umbördelung aufweist, welche durch ein lösbares Spannelement umgriffen und mit dem Ring verbunden ist. Zwischen der Umbördelung und dem Ring ist darüber hinaus ein umlaufendes Dichtelement angeordnet. Der Ring ist dabei aus Blech gefertigt und weist in seinem Querschnitt V-förmig zueinander ausgerichtete Schenkel auf, die über einen Steg mit dem Grundrohr des Wärmeübertragers verbunden sind.

Wärmeübertrager dienen beispielsweise der Wärmerückgewinnung oder der Kühlung des für die Rückführung bestimmten Abgasanteils eines Verbrennungsmotors. Durch die Rückführung zur Verbrennungsluft verringert sich insbesondere beim Einsatz von mageren Gemischen in Kombination mit hohen Verbrennungstemperaturen der Anteil an umweltschädlichen Stickoxiden im Abgas. Üblicherweise sieht ein derartiger Wärmeübertrager einen Rohrkörper vor, welches jeweils endseitig mit einem Rohrboden verbunden ist. Die das Abgas führenden Rohre sind dabei innerhalb des Rohrkörpers zu einem Rohrbündel zusammengefasst und erstrecken sich zwischen gegenüberliegenden Rohrböden bzw. sind in diesen gehalten. Der mit den Rohrböden verbundene Rohrkörper bildet somit eine von Kühlfluid durchströmbare Kammer, welche über das Rohrbündel von dem Abgas passiert wird.

Um den Wärmeübertrager und insbesondere den Abgaswärmeübertrager an vor- oder nachgeschaltete Bauteile anbinden zu können, ist üblicherweise ein Flansch vorgesehen, der direkt durch den Einsatz von Spritzguss- oder Druckgussverfahren an den betroffenen Bauteilen erzeugt oder falls der Einsatz solcher Verfahren nicht möglich ist, durch eine Montage daran angebracht wird. Üblicherweise ist dabei der Flansch als Gussteil ausgebildet.

Nachteilig am Stand der Technik ist insbesondere, dass der Flansch ein zusätzliches Bauteil darstellt, welches aufwändig mechanisch nachbearbeitet werden muss. Als weiterer Nachteil erweist sich indes, dass ein derartiger als Gussteil ausgebildeter Flansch vergleichsweise schwer ist, was insbesondere bei der Verwendung in einem Kraftfahrzeug den Kraftstoffverbrauch erhöht und hohe Materialkosten verursacht.

Die vorliegende Erfindung beschäftigt sich daher mit dem Problem, für einen Wärmeübertrager der gattungsgemäßen Art eine verbesserte Ausführungsform anzugeben, welcher insbesondere die aus dem Stand der Technik bekannten Nachteile überwindet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, bei einem an sich bekannten Wärmeübertrager für eine Brennkraftmaschine einen um einen Rohrkörper des Wärmeübertragers umlaufenden Flansch erstmals aus einem ersten und einem zweiten kreisförmigen Teil zusammenzusetzen, wobei beide Teile als gezogene oder rollierte Blechbauteile ausgebildet sind. Hierdurch ist im Vergleich zu einem Gussteil nicht nur ein Gewichtsvorteil realisierbar, sondern zudem kann auch eine aufwändige und damit teure mechanische Nachbearbeitung entfallen. Mit dieser Erfindung gelingt es einen Wärmeübertrager kostengünstiger als im bisherigen Seriendesign herzustellen. Darüber hinaus ist durch die Aufteilung des Flansches in zwei Teile nun erstmals ein Ziehen oder Rollieren möglich, was bei bisherigen einteiligen Flanschen aufgrund des Verhältnisses Höhe zu Breite des Tiefziehteiles nicht möglich war. Je tiefer der Flansch tiefgezogen werden muss und je geringer der Durchmesser des Flansches ist, desto schwieriger ist der Herstellprozess, bis hin zum Unmöglichen, da es zu Rissbildung kommt. Durch das zweiteilige Ringdesign, gelingt es einen einfacheren und günstigeren Zieh- oder Rollierprozess darzustellen. Vorteilhaft ist zudem, dass durch das vergleichsweise einfache Design der Flansch-Hälften bessere Oberflächeneigenschaften erzeugt werden können, wodurch z.B. beim angeflanschten Bauteil eine Oberflächenbearbeitung entfallen oder eine kostengünstigere Dichtung eingesetzt werden kann. Vorzugsweise ist dabei der Wärmeübertrager als Abgaswärmeübertrager ausgebildet, wobei der Flansch zur Anbindung weiterer Bauteile dient.

Bei einer vorteilhaften Weiterbildung der erfindungsgemäßen Lösung sind die beiden Teile des Flansches mit dem Rohrkörper verschweißt, verlötet, verpresst oder verklebt. Da bei einem als Abgaswärmeübertrager ausgebildeten Wärmeübertrager das vergleichsweise heiße Abgas in einem in dem Rohrkörper verlaufenden Rohrbündel geführt wird, fließt durch eine von dem Rohrkörper und dem Rohrbündel gebildete Kammer lediglich Kühlmedium, so dass eine Anbindung des außen am Rohrkörper anliegenden Flansches mittels einer Verklebung theoretisch möglich ist. Ebenfalls möglich ist ein Verlöten bzw. Verschweißen oder aber auch ein Verpressen, wobei dies voraussetzt, dass der Flansch als Ring ausgebildet ist und vollständig um den Rohrkörper des Wärmeübertragers verläuft. Rein theoretisch ist selbstverständlich auch ein lediglich aneinander Anliegen der beiden Teile des Flansches denkbar, ohne dass diese in diesem Fall miteinander verbunden sind oder aber ein beabstandetes Anordnen.

Bei einer weiteren vorteilhaften Ausführungsform der erfindungsgemäßen Lösung weist der Flansch einen V-förmigen Querschnitt auf und/oder besitzt Anlagebereiche, mit welchen er flächig am Rohrkörper anliegt. Durch die Ausbildung des Flansches mit einem V-förmigen Querschnitt wird eine Befestigungskontur geschaffen, über welche beispielsweise ein Spannring gezogen werden kann. Zwischen dem Spannring und dem Flansch wird dabei das weitere am Wärmeübertrager zu befestigende Bauteil eingeklemmt. Durch die Anlagebereiche ist eine größere Kontaktfläche zwischen dem Flansch und dem Rohrkörper gegeben, was insbesondere bei einem Spaltlöten von Vorteil ist. Auch bei einem Verkleben des Flansches mit dem Rohrkörper kann dadurch eine größere Klebefläche bereitgestellt werden.

Bei einer vorteilhaften Weiterbildung der erfindungsgemäßen Lösung sind das erste und zweite Teil des Flansches als Gleichteile ausgebildet. Durch die Ausbildung des Flansches aus zwei Gleichteilen reduzieren sich insbesondere die Herstellungskosten, da für beide Teile dasselbe Werkzeug eingesetzt werden kann.

Bei einer vorteilhaften Weiterbildung der erfindungsgemäßen Lösung ist ein weiterer Rohrkörper vorgesehen, wobei die beiden Rohrkörper jeweils als Gehäuseteile ausgebildet sind und wobei an jedem Gehäuseteil ein erstes oder ein zweites kreisförmiges Teil des Flansches angeordnet ist, die zusammen den Flansch bilden und die beide als gezogene oder rollierte Blechbauteile ausgebildet sind. Somit kann nicht nur ein dementsprechender Flansch an einem Rohrkörper, sondern auch an topfförmig ausgebildeten Gehäuseteilen vorgesehen werden, wobei ein erstes Teil des Flansches am Rohrkörper und ein zweites Teil des Flansches am weiteren Rohrkörper angeordnet ist. Beim stirnseitigen Zusammensetzen dieser beiden als Gehäuseteile ausgebildeten Rohrkörper ergibt sich aus den beiden Teilen der gemeinsame Flansch. Selbstverständlich können dabei die beiden Teile auch beabstandet zueinander angeordnet sein. Auch hier ist es wiederum äußerst vorteilhaft, den Flansch zum Verbinden der beiden Gehäuseteile in zwei Teile aufzuteilen und dadurch ein zweiteiliges Ringdesign zu schaffen, welches in einem einfachen und zugleich kostengünstigen Zieh- oder Rollierprozess herstellbar ist. Die als gezogene oder rollierte Blechbauteile hergestellten Teile des Flansches besitzen darüber hinaus bessere Oberflächeneigenschaften und bedürfen insbesondere auch keiner nachträglichen Oberflächenbearbeitung. Zugleich können aufgrund der besseren Oberflächeneigenschaften auch kostengünstigere Dichtungen eingesetzt werden. Eine Abdichtung des Wärmeübertragers kann dabei durch eine dichte Verbindung der beiden Rohrteile im Bereich einer Trennfläche erfolgen und/oder über eine dichte Verbindung der beiden Teile des Flansches.

Alternativ hierzu ist auch denkbar, dass die beiden Teile des Flansches nicht als Gleichteile ausgebildet sind, sondern dass das erste Teil einen geringeren Außendurchmesser aufweist als das zweite Teil und in dieses einschiebbar ist. In diesem Fall sind dabei die beiden Teile in einem Überlappungsbereich miteinander verbunden, beispielsweise dicht miteinander verlötet. Selbstverständlich können dabei die beiden Teile des Flansches auch nur aneinander anliegen und mittels einer zusätzlichen Schelle eingefasst sein. Zusätzlich ist selbstverständlich jedes Teil über seinen jeweiligen Anlagenbereich mit dem Rohrkörper bzw. dem Gehäuseteil verbunden, beispielsweise verlötet. Im Unterschied zu einem aus Gleichteilen zusammengesetzten Flansch erfordert ein derartig hergestellter Flansch zwar zwei unterschiedlich große Teile, mittels diesen ist jedoch zumindest in einem Überlappungsbereich ein zumindest geringfügiger Toleranzausgleich möglich, wodurch sich insbesondere Fertigungstoleranzen leichter kompensieren lassen. Eine Abdichtung des Wärmeübertragers kann auch dabei durch eine dichte Verbindung der beiden Rohrteile im Bereich der Trennfläche erfolgen und/oder über eine dichte Verbindung der beiden Teile des Flansches.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch einen erfindungsgemäßen Wärmeübertrager mit einem zweiteiligen Flansch mit zwei als Gleichteilen ausgebildeten Teilen,
- Fig. 2: eine Darstellung wie in Fig. 1, jedoch mit unterschiedlichen Teilen, die zusammen den Flansch bilden,
- Fig. 3: eine Darstellung wie in Fig. 1, jedoch mit zwei jeweils ein Gehäuseteil bildenden Rohrkörpern, an welchen jeweils ein Teil des Flansches angeordnet sind und wobei die beiden Teile als Gleichteile ausgebildet sind,
- Fig. 4: eine Darstellung wie in Fig. 3, jedoch bei unterschiedlich großen Teilen des Flansches.

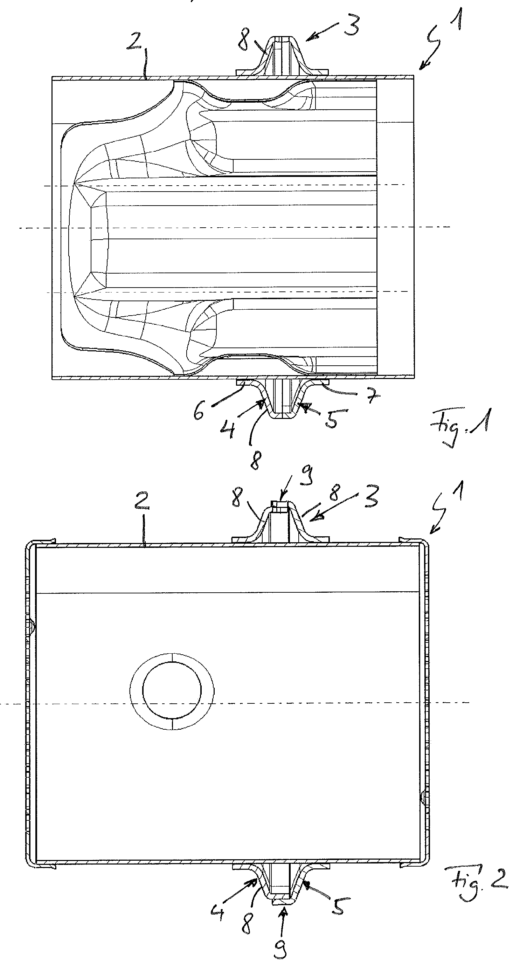

Entsprechend den Fig. 1 bis 4 weist ein erfindungsgemäßer Wärmeübertrager 1 für eine im Übrigen nicht gezeigte Brennkraftmaschine einen Rohrkörper 2 mit einem um den Rohrkörper 2 verlaufenden Flansch 3 auf. Erfindungsgemäß weist nun dieser Flansch 3 ein erstes kreisförmiges Teil 4 sowie ein zweites kreisförmiges Teil 5 auf, die beide als gezogene oder rollierte Blechbauteile ausgebildet sind und zusammen den Flansch 3 bilden. Die beiden Teile 4, 5 können dabei am selben Rohrkörper 2 oder aber unterschiedlichen Rohrkörpern 2, 2' angeordnet sein.

Betrachtet man dabei die beiden Teile 4, 5 gemäß der Fig. 1, so kann man erkennen, dass diese als Gleichteile ausgebildet sind und dadurch kostengünstig mit ein und demselben Ziehwerkzeug hergestellt werden können. Jedes dieser beiden Teile 4, 5 weist dabei jeweils einen Anlagenbereich 6, 7 auf, und liegt über den jeweiligen Anlagenbereich 6, 7 flächig an einem Außenumfang des Rohrkörpers 2 an. Hierdurch ist insbesondere auch eine flächige Verbindung des jeweiligen Teils 4, 5 des Flansches 3 über den jeweiligen Anlagenbereich 6, 7 mit dem Rohrkörper 2 möglich, beispielsweise durch eine Verlötung oder eine Verklebung.

Betrachtet man die Fig. 1 weiter, so kann erkennen, dass die beiden Teile 4, 5 des Flansches 3 stirnseitig miteinander verbunden, beispielsweise verlötet sein können. Eine derartige feste Verbindung der beiden Teile 4, 5 miteinander kann, muss jedoch nicht erfolgen, das heißt die beiden Teile 4, 5 können auch beabstandet zueinander angeordnet sein oder aber lediglich lose aneinander anliegen. Der Flansch 3 besitzt im vorliegenden Fall einen trapezförmigen Querschnitt und stellt Dichtflächen 8 bereit. Über derartige Dichtfläche 8 kann beispielsweise ein weiteres Bauteil mittels eines Spannrings dicht mit dem Rohrkörper 2 verbunden werden.

Betrachtet man die Ausführungsform des erfindungsgemäßen Wärmeübertragers1 gemäß der Fig. 2, so kann erkennen, dass bei dem dort gezeigten Flansch 3 das erste Teil 4 einen geringeren Außendurchmesser aufweist als das zweite Teil 5 und in dieses einschiebbar, im konkreten Fall sogar eingeschoben ist. Die beiden Teile 4, 5 sind dabei in einem Überlappungsbereich 9 miteinander verbunden, insbesondere miteinander verlötet, wobei eine Verbindung im Überlappungsbereich 9 vorgesehen sein kann, jedoch vorgesehen sein muss.

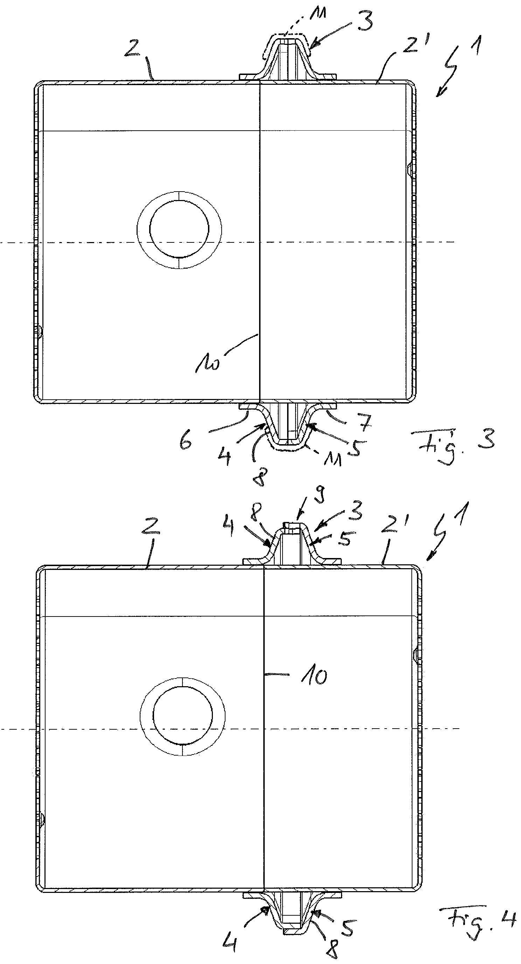

Betrachtet man die Ausführungsformen des erfindungsgemäßen Wärmeübertragers 1 gemäß den Fig. 3 und 4 so ist hier neben dem Rohrkörper 2 ein weiterer Rohrkörper 2' vorgesehen, wobei die beiden Rohrkörper 2, 2' stirnseitig an einer Trennfläche 10 aneinander stoßen. Bei dem gemäß der Fig. 3 gezeigten Wärmeübertrager 1 ist der Flansch 3 wiederum zweiteilig ausgebildet, nämlich aus einem ersten Teil 4 und einem zweiten Teil 5, wobei das erste Teil 4 über seinen Anlagebereich 6 mit dem Rohrkörper 2 und das zweite Teil 5 mit seinem Anlagebereich 7 mit dem Rohrkörper 2' verbunden, beispielsweise verlötet, ist. Selbstverständlich können dabei die beiden Teile 4, 5 des Flansches 3 auch nur aneinander anliegen und mittels einer zusätzlichen Schelle 11 eingefasst sein, wie dies in Fig. 3 mit unterbrochen gezeichneter Linie dargestellt ist. Die beiden Rohrkörper 2, 2' sind dabei jeweils als gezogene oder rollierte Blechbauteile ausgebildet, ebenso wie die beiden kreisförmigen Teile 4, 5 des Flansches 3.

Gemäß der Fig. 3 sind dabei die beiden Teile 4, 5 des Flansches 3 als Gleichteile ausgebildet und besitzen deshalb wiederum dieselben Vorteile wie der im Wesentlichen gleiche Flansch 3 gemäß der Fig. 1. In der Fig. 4 wiederum weist das erste Teil 4 des Flansches 3 einen geringeren Außendurchmesser auf als das zweite Teil 5 und ist in dieses einschiebbar. Im konkreten Fall ist das erste Teil 4 bereits in das zweite Teil 5 eingeschoben, wodurch der gemäß der Fig. 2 beschriebene Überlappungsbereich 9 entsteht. In diesem Überlappungsbereich 9 können die beiden Teile 4, 5 dicht miteinander verbunden werden.

Generell kann der Wärmeübertrager 1 beispielsweise als Abgaswärmeübertrager ausgebildet sein.

Um eine Abdichtung der gemäß den in den Fig. 3 und 4 gezeigten Rohrkörper 2, 2' miteinander zu bewirken, müssen diese entweder im Bereich der Trennfläche 10 dicht miteinander verbunden werden und/oder die beiden Teile 4, 5 des Flansches 3 müssen sowohl mit einander als auch mit dem jeweiligen Rohrkörper 2, 2' dicht verbunden werden.

Durch die Aufteilung des bislang einteiligen, bzw. einstückigen Flansches 3 in zwei kreisförmige Teile 4, 5, können dieses problemlos als gezogene oder rollierte Blechbauteile hergestellt werden, was bei bislang einteiligen Flanschen nicht möglich war, da es je nach Verhältnis der Höhe zur Breite des Blechbauteiles zu einer unerwünschten Rissbildung kommen konnte. Durch das zweiteilige Rissdesign gelingt somit ein einfacher und kostengünstiger Fertigungsprozess, der die Herstellungskosten des Wärmeübertragers 1 reduziert. Vorteilhaft ist dabei darüber hinaus, dass durch das vergleichsweise einfache Design der beiden Teile 4, 5 des Flansches 3 bessere Oberflächeneigenschaften erzeugt werden können, wodurch z.B. bei einem angeflanschten Bauteil eine Oberflächenbearbeitung entfallen oder aber eine kostengünstiger Dichtung eingesetzt werden kann. Besonders die Ausbildung der beiden Teile 4, 5 als Gleichteile reduziert dabei nochmals die Herstellungskosten.

## Patentansprüche

1. Wärmeübertrager (1) für eine Brennkraftmaschine mit einem Rohrkörper (2,2') und mit einem um den Rohrkörper (2,2') verlaufenden Flansch (3),
**dadurch gekennzeichnet,**
**dass** der Flansch (3) durch ein erstes kreisförmiges Teil (4) und/oder ein zweites kreisförmiges Teil (5) gebildet ist, die beide als gezogene oder rollierte Blechbauteile ausgebildet sind.

2. Wärmeübertrager nach Anspruch 1,
**dadurch gekennzeichnet,**
**dass** das erste und das zweite Teil (4,5) als Gleichteile ausgebildet sind.

3. Wärmeübertrager nach Anspruch 2,
**dadurch gekennzeichnet,**
**dass** die beiden Teile (4,5) jeweils einen Anlagebereich (6,7) aufweisen, der flächig an einem Außenumfang des Rohrkörpers (2,2') anliegt.

4. Wärmeübertrager nach Anspruch 3,
**dadurch gekennzeichnet,**
- **dass** die beiden Teile (4,5) stirnseitig miteinander und mit dem Anlagebereich (6,7) mit dem Rohrkörper (2,2') verbunden, insbesondere verlötet, sind, oder
- **dass** die beiden Teile (4,5) beabstandet zueinander angeordnet sind.

5. Wärmeübertrager nach Anspruch 1,
**dadurch gekennzeichnet,**
**dass** das erste Teil (4) einen geringeren Außendurchmesser aufweist als das zweite Teil (5) und in dieses einschiebbar ist.

6. Wärmeübertrager nach Anspruch 5,
**dadurch gekennzeichnet,**
**dass** die beiden Teile (4,5) in einem Überlappungsbereich (9) miteinander verbunden, insbesondere miteinander verlötet, sind, oder lediglich aneinander anliegen.

7. Wärmeübertrager (1) nach Anspruch 1,
**dadurch gekennzeichnet,**
**dass** ein weiterer Rohrkörper (2') vorgesehen ist, wobei die beiden Rohrkörper (2,2') als Gehäuseteile ausgebildet sind und wobei an jedem Gehäuseteil ein erstes oder ein zweites kreisförmiges Teil (4,5) angeordnet ist, die zusammen den Flansch bilden (3) und die beide als gezogene oder rollierte Blechbauteile ausgebildet sind.

8. Wärmeübertrager (1) nach Anspruch 7,
**dadurch gekennzeichnet,**
**dass** das erste und das zweite Teil (4,5) als Gleichteile ausgebildet sind.

9. Wärmeübertrager nach Anspruch 7 oder 8,
**dadurch gekennzeichnet,**
**dass** die beiden Teile (4,5) jeweils einen Anlagebereich (6,7) aufweisen, der flächig an einem Außenumfang des Gehäuseteils anliegt.

10. Wärmeübertrager nach einem der Ansprüche 7 bis 9,
**dadurch gekennzeichnet,**
- **dass** die beiden Teile (4,5) stirnseitig miteinander verbunden, insbesondere dicht miteinander verlötet, sind, und/oder
- **dass** die beiden Gehäuseteile stirnseitig an einer Trennfläche (10), insbesondere dicht, miteinander verbunden sind.

11. Wärmeübertrager nach Anspruch 7,
**dadurch gekennzeichnet, dass**
das erste Teil (4) einen geringeren Außendurchmesser aufweist als das zweite Teil (5) und in dieses einschiebbar ist.

12. Wärmeübertrager nach Anspruch 11,
**dadurch gekennzeichnet,**
**dass** die beiden Teile (4,5) jeweils einen Anlagebereich (6,7) aufweisen, der flächig an einem Außenumfang des Gehäuseteils anliegt.

13. Wärmeübertrager nach Anspruch 11 oder 12,
**dadurch gekennzeichnet,**
- **dass** die beiden Teile (4,5) in einem Überlappungsbereich (9) miteinander verbunden, insbesondere dicht miteinander verlötet, sind, oder
- **dass** die beiden Teile (4,5) mittels einer Schelle (11) eingefasst sind.

14. Wärmeübertrager nach einem der Ansprüche 1 bis 13,
**dadurch gekennzeichnet, dass**
der Wärmeübertrager (1) als Abgaswärmeübertrager ausgebildet ist.
